(19) Europäisches Patentamt
European Patent Office
Office européen des brevets

(11) **EP 1 266 868 A1**

(12) **DEMANDE DE BREVET EUROPEEN**

(43) Date de publication:
**18.12.2002 Bulletin 2002/51**

(51) Int Cl.⁷: **C03B 5/24**, C03B 5/167

(21) Numéro de dépôt: **01500146.4**

(22) Date de dépôt: **11.06.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **Avacon, S.A.**
**01400 Llodio (Alava) (ES)**

(72) Inventeurs:
• **Arechaga Camara, Alfonso**
**01400 Llodio (Alava) (ES)**
• **Ugarte Gochi, Jesus**
**01400 Llodio (Alava) (ES)**

(74) Mandataire: **Urizar Barandiaran, Miguel Angel**
**Gordoniz, 22-5**
**P.O.Box 6454**
**48012 Bilbao (Vizcaya) (ES)**

(54) **Four de fusion du verre**

(57)    Four de fusion du verre, de ceux qui se composent d'une chambre de fusion dans laquelle se trouve la masse de verre liquide avec bouche de sortie et, au moins, une chambre de récupération des gaz de combustion, des moyens pour fournir le combustible, disposant d'au moins un capteur de température de la masse plongé dans la masse de verre liquide et situé approximativement à une hauteur ($h_2$) pa rapport au fond de la chambre de fusion de 1/3 à 1/5 de la hauteur ($h$) du niveau de la masse de verre liquide, et $1/5\,h \leq h_2 \leq 1/3\,h$ dans l'axe longitudinal de la chambre de fusion, à une distance ($l_1$) par rapport à la paroi de la chambre opposée à la bouche de sortie, de 0,6 à 0,85% de la longueur (1) de la chambre de fusion, $0,6\,1 \leq l_1 \leq 0,85\,1$.
   Applicable à la fabrication de récipient en verre.

Fig. 1

**Description**

Dans un four de fusion du verre, il faut contrôler et réguler les charges et la température de la masse fondue.

Le contrôle et la régularisation des charges qu'on utilise à l'heure actuelle donne des résultats acceptables, mais il n'en est pas de même pour le contrôle et la régularisation des températures.

Il faut tenir compte du fait que les températures sont très élevées dans un four à verre, habituellement supérieures à 1.300 °C, que la masse de verre fondu a une grande inertie thermique, que les récipients ne provenant pas d'une masse de verre qui ne se trouve pas à une température appropriée sont rejetés car considérés comme étant défectueux.

Tout cela est à l'origine de grosses consommations incontrôlées d'énergie et de grandes pertes "a posteriori" de récipients rejetés.

Le demandeur a recherché l'origine des problèmes exposés ci-dessus et il considère qu'ils proviennent de la méconnaissance des températures réelles dans la masse du verre liquide et que cela est dû au fait que la disposition actuelle des capteurs de température à la périphérie de la masse liquide est fondamentalement inappropriée.

Il considère qu'avec les dispositions actuelles, on ne tient pas compte des perturbations incontrôlables de la température à l'intérieur de la masse, de la convection interne de la masse liquide de verre, ni des variations de température dans une coupe synchronique dans la masse même du liquide.

Il considère également que les capteurs utilisés ne sont pas appropriés et, fondamentalement, comme on l'a déjà dit, que la situation des capteurs de température est absolument inappropriée.

Les capteurs de température doivent être plongés dans le verre liquide dans la zone qui fournit la meilleure information sur les température et qui perçoit le plus rapidement possible les perturbations de la température dans la masse.

Cette zone a été découverte par le demandeur.

C'est pourquoi, le four de fusion du verre de la présente invention est de ceux qui se composent d'une chambre de fusion dans laquelle se trouve la masse de verre liquide avec une bouche de sortie et, au moins, une chambre de récupération des gaz de combustion, des moyens pour fournir un combustible, et qui se caractérise par le fait qu'il dispose, au moins, d'un capteur de température de masse plongé dans la masse de verre liquide et situé approximativement:

  a) à une hauteur par rapport au fond de la chambre de fusion de 1/3 à 1/5 de la hauteur du niveau de la masse de verre liquide, et

$$1/5\ h \leq h_2 \leq 1/3\ h$$

  b) dans l'axe longitudinal de la chambre de fusion, à une distance par rapport à la paroi de la chambre opposée à la bouche de sortie, de 0,6 à 0,85% de la longueur de la chambre de fusion

$$0,6\ l \leq l_1 \leq 0,85\ l.$$

Il se caractérise également par le fait qu'on dispose de moyens pour calculer, à partir des données fournies par le(s) capteur(s) de température de la masse et le(s) capteur(s) de température des gaz, la dérivée de la température dans la masse liquide et la dérivée de la température dans les gaz en fonction du temps.

Pour mieux comprendre l'objet de la présente invention, on a représenté sur les plans une forme préférentielle de réalisation pratique susceptible de changements accessoires, qui n'en dénaturent pas le fondement.

La figure 1 est une représentation schématique en hauteur d'un four de fusion du verre avec le monitorage de capteurs qui existent actuellement et avec le monitorage de capteurs proposé dans l'invention.

La figure 2 est une représentation schématique et partielle en plan de la figure 1.

On décrit ci-dessous un exemple de réalisation pratique, non limitative, de la présente invention.

Dans ce four, on suppose que le monitorage correspondant des charges telles que le silice, les carbonates, les composants de chaux ou de bore, etc. est installé, par exemple au moyen d'un capteur de niveau (1) dans le trou de coulée (2) du verre liquide (3), qui donne les ordres correspondants aux trémies desdits chargements.

Le four en soi est conventionnel, avec sa chambre de fusion (4) et chambre(s) de récupération des gaz (5) disposées en vue de la récupération de la chaleur avec l'économie d'énergie qui en résulte.

Il est absolument vital, dans un four à verre, de contrôler la température à laquelle se trouvent les gaz (g) et le verre liquide (3).

De façon conventionnelle, on a disposé des capteurs de température (6) des gaz dans la partie supérieure de la chambre de fusion (4) et plusieurs paires de capteurs de la température ($a_1$) ($a_2$) de la masse, installés dans la partie inférieure. Dans chaque paire de capteurs de masse, l'un des capteurs ($a_1$) est le principal et, traversant le réfractaire (7), une hauteur ($h_1$) très faible dépasse dans le verre liquide (3), cette hauteur ($h_1$) étant de 2 ou 3 cm.

Le contact avec le verre liquide (3) détériore en trois ans le capteur inférieur ($a_1$) qui dépasse, et pour que le four puisse continuer à être opérationnel, on a disposé un autre capteur de masse ($a_2$) qui le remplace dans ses fonctions. Ce second capteur de masse ($a_2$) n'arrive pas à pénétrer dans le verre fondu (3), c'est pourquoi ses prestations sont inférieures à celles du capteur remplacé ($a_1$).

Cette façon de mesurer la température du verre liquide s'est révélée inappropriée dans la pratique.

Le demandeur considère qu'on n'utilise pas les capteurs appropriés, si on ne les place pas dans la position adéquate, probablement parce qu'on n'a pas tenu compte, jusqu'à présent, dans cette demande de brevet, de certaines caractéristiques de la masse de verre fondu dans la chambre de fusion (4). Envisageons ci-dessous trois d'entre elles:

1).- À la surface (S1) du réfractaire, la température se situe habituellement autour de 1.300 °C et à la surface (S2) du verre liquide, elle est d'ordinaire de 1.450 °C environ, avec des variations appréciables entre elles et une grande inertie de leur part.

2).- À l'intérieur de la masse de verre fondu, il y a des courants de convection (C) qui, étant donné la grande viscosité, normalement supérieure à 100 poises, du verre liquide, sont à l'origine de vitesses pratiquement nulles au contact avec le réfractaire (7) et clairement appréciables à l'intérieur de la masse fondue.

3).- Étant donné la grande inertie de la masse du verre liquide, les perturbations possibles sont transmises très lentement, le capteur inférieur ($a_1$) les captant très tard et partiellement.

Toutes ces considérations indiquent que l'insatisfaction des fabricants de verre, du fait de la perception tardive et inappropriée de ce qui se passe dans la masse de verre, est due, du moins partiellement, aux capteurs de température de la masse ($a_1$), ($a_2$).

Le demandeur a pris en considération les caractéristiques précédentes et a réussi à vérifier quelle est la zone optimalede disposition du capteur ($b_1$) de masse dans la masse de verre liquide, pour que l'utilisateur du four ait une connaissance rapide et appropriée de ce qui s'y déroule.

Les coordonnées sont, de façon approximative, les suivantes:

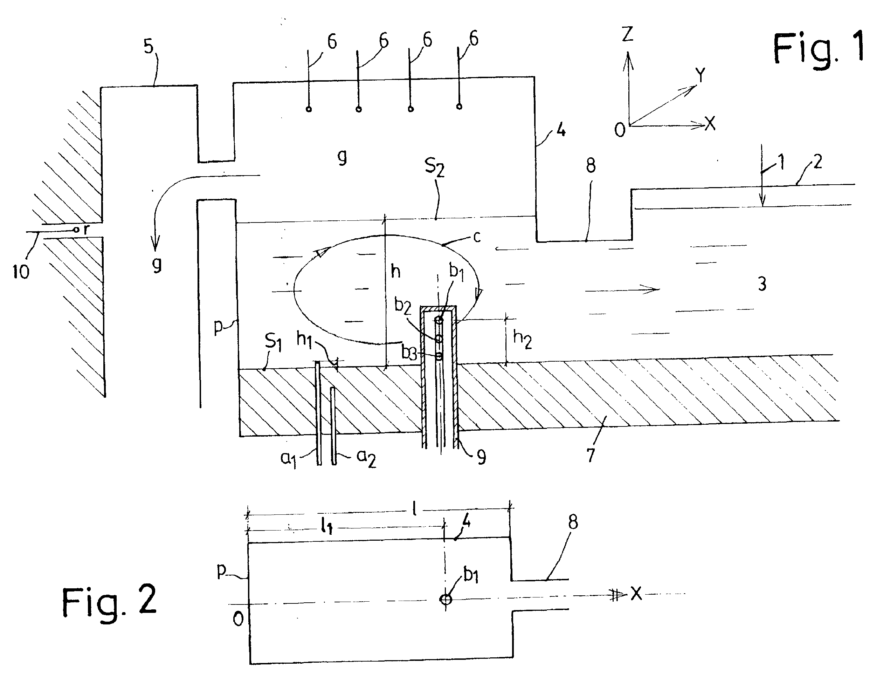

- Axe OZ: le capteur de température de la masse ($b_1$) doit être installé en profondeur, plongé dans la masse liquide à une hauteur ($h_2$) par rapport au fond ou du réfractaire (S1) de 1/3 à 1/5 de la hauteur (h) du niveau de la masse liquide 1/5 h $\leq h_2 \leq$ 1/3 h, avec, de préférence, $h_2 \cong$ 1/4 h.
- Axe OY: Y = 0
- Axe OX: On disposera sur l'axe OX (figure 2) de symétrie (longitudinal) de la chambre de fusion (4) et la bouche de sortie (8) vers le trou de coulée (2), selon le dessin et par rapport à la paroi (p) opposée de la bouche de sortie (8) le capteur de température ($b_1$), qui sera placé à une distance ($l_1$) de 0,6 à 0,85% de la longueur (1) de la chambre de fusion (4):

$$0,6 \, l \leq l_1 \leq 0,85 \, l.$$

En principe et étant donné sa situation optimale, un seul capteur de température de la masse ($b_1$) suffit pour la masse fondue.

Afin d'éviter la détérioration du capteur ($b_1$) dans un milieu aussi agressif, il a été prévu de le mettre dans une gaine de molybdène (9).

Pour plus de sécurité, la gaine de molybdène peut comporter à l'intérieur plusieurs capteurs ($b_1$), ($b_2$), ($b_3$), de sorte que l'ensemble continue à fonctionner, même si le premier d'entre eux ($b_1$), qui peut être retiré aisément, se détériore.

On peut appliquer aux autres capteurs ($b_2$), ($b_3$) tout ce qui a été dit au sujet du premier capteur ($b_1$).

Il a été prévu de mettre en série (l'une derrière l'autre) deux gaines de molybdène avec leurs capteurs respectifs, de sorte que si celle qui est immergée dans la masse fondue est détériorée, l'autre gaine la pousse toalement vers l'intérieur de la masse et occupe sa place.

Il est important également de connaître la température des gaz (g) qui sont produits par combustion dans la chambre de fusion (4).

Afin d'éviter des interférences de rayonnement calorique des parois de la chambre de fusion (4), des effets de convection et autres, il est préférable de placer le capteur (10) pour la mesure de la température des gaz (g) ou des fumées, dans un réceptacle (r) préparé à cet effet à l'extérieur de la chambre de récupération des gaz (5), par exemple, sur les parois du réfractaire. On place un capteur (10) dans chaque chambre (5) existante.

Monitorage.

La température ($\theta_1$) dans la masse de verre, varie avec le temps (t): $\theta_1$ = f (t), la dérivée correspondante ($\theta'_1$) étant obtenue à partir des données du capteur de masse ($b_1$).

La température ($\theta_2$) dans les gaz (g) varie en fonction du temps (t): $\theta_2$ = f (t), la dérivée correspondante ($\theta'_2$) étant obtenue à partir des données du capteur des gaz (10).

On disposera des moyens informatiques suivants, programmés avec un algorithme de décision pour la régulation de l'alimentation en combustible de la chambre de fusion (4).

À chaque instant, avec les seuils correspondants d'inertie et de sécurité, l'algorithme détermine que:

| $\theta'_1$ | $\theta'_2$ | ORDRE | VITESSE EXÉCUTION DE L'ORDRE |
|---|---|---|---|
| + positive = | + | $\nabla$ diminuer combustible | lentement |
| - négative = | - = | $\Delta$ augmenter combustible | rapidement |
| + positive - | - + | Alarme, régime anormal du four | rapide |

De sorte que:

1.- Si la dérivée ($\theta'_2$) de la température des gaz et la dérivée ($\theta'_1$) de la température de la masse liquide augmentent ou ne varient pas, l'alimentation en combustible diminue lentement.

2.- Si l'une des dérivées ($\theta'_1$) ($\theta'_2$) diminue et l'autre n'augmente pas, l'alimentation en combustible diminue lentement.

3.- Si l'une des dérivées augmente et l'autre diminue, l'alarme est déclenchée en vue d'une intervention rapide.

Les considérations suivantes sont introduites:

- On considère qu'une température est "constante", si ses oscillations sont inférieures à 1,5°C et si sa période d'oscillation inférieure à 10 minutes.
- On accepte que le fonctionnement du four est stable, si les températures du capteur de la masse ($\theta_1$) et de gaz ($\theta_2$) se maintiennent constantes.
- Après une altération corrigée par le système, le four entre dans un régime stable pendant une certaine période de temps. Les nouvelles valeurs ($\theta_1$) et ($\theta_2$) de cette nouvelle période stable sont retenues comme "de consigne" à l'avenir.

La représentation des dessins est schématique et explicative, c'est pourquoi le dimensionnement comparatif des éléments n'est pas réel; par exemple, la taille du capteur de masse ($b_1$) ou de sa gaine (9) sont inférieures à ce que l'on peut apprécier sur les dessins.

**Revendications**

1. Four de fusion du verre, de ceux qui se composent d'une chambre de fusion dans laquelle se trouve la masse de verre liquide avec bouche de sortie et, au moins, une chambre de récupération des gaz de combustion, des moyens pour fournir le combustible, se caractérisant par le fait qu'il dispose, au moins, d'un capteur de température de la masse plongé dans la masse de verre liquide et situé approximativement:

   a) à une hauteur ($h_2$) par rapport au fond de la chambre de fusion de 1/3 à 1/5 de la hauteur (h) du niveau de la masse de verre liquide, et

$$1/5\ h \leq h_2 \leq 1/3\ h.$$

   b) dans l'axe longitudinal de la chambre de fusion, à une distance ($l_1$) par rapport à la paroi de la chambre opposée à la bouche de sortie, de 0,6 à 0,85% de la longueur (1) de la chambre de fusion

$$0,6 \, l \leq l_1 \leq 0,85 \, l.$$

**2.** Four de fusion du verre, selon la revendication précédente, se caractérisant par le fait que le capteur de température de la masse est placé à l'intérieur d'une gaine de molybdène.

**3.** Four de fusion du verre, selon les revendications précédentes, se caractérisant par le fait que dans la gaine de molybdène sont placés plusieurs capteurs de température de la masse.

**4.** Four de fusion du verre, selon la première revendication, se caractérisant par le fait que communiquant avec chacune des chambres de récupération des gaz de combustion, on a disposé un réceptacle, dans lequel se trouve un capteur de température des gaz.

**5.** Four de fusion du verre, selon les revendications précédentes, se caractérisant par le fait qu'il dispose de moyens pour calculer, à partir des données fournies par le(s) capteur(s) de température de la masse ry le(s) capteur(s) de température des gaz, la dérivée de la température dans la masse liquide $(\theta'_1)$ et la dérivée de la température dans les gaz $(\theta'_2)$ en fonction du temps, le mode de fourniture du combustible étant décidé sur la base de ces dérivées $(\theta'_1)$, $(\theta'_2)$.

**6.** Four de fusion du verre, selon la cinquième revendication, se caractérisant par le fait que la décision sur la base de ces dérivées $(\theta'_1)$, $(\theta'_2)$ est fondée sur un algorithme, de telle sorte que:

a) si la dérivée $(\theta'_2)$ de la température des gaz et la dérivée $(\theta'_1)$ de la température de la masse liquide augmentent ou ne varient pas, l'alimentation en combustible diminue lentement;
b) si l'une des dérivées $(\theta'_1)$ $(\theta'_2)$ diminue et l'autre n'augmente pas, l'alimentation en combustible augmente rapidement;
c) si l'une des dérivées augmente et l'autre diminue, l'alarme est déclenchée en vue d'une intervention rapide.

Fig. 1

Fig. 2

EP 1 266 868 A1

**Office européen des brevets**

## RAPPORT DE RECHERCHE EUROPEENNE

Numéro de la demande

EP 01 50 0146

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 405 351 A (SHEINKOP ISAC M) 20 septembre 1983 (1983-09-20) * colonne 3, ligne 17 - colonne 4, ligne 34; figures * | 1-6 | C03B5/24 C03B5/167 |
| A | FR 2 195 597 A (EMBALLAGE STE GLE POUR) 8 mars 1974 (1974-03-08) * page 3, ligne 24 - page 4, ligne 10; revendications 1-4; figures * | 1-6 | |
| A | US 3 573 017 A (GRIEM PAUL D JR) 30 mars 1971 (1971-03-30) * colonne 5, ligne 71 - colonne 6, ligne 5; figures * | 1-6 | |
| A | GB 1 290 742 A (J.M.Y. LE CLERC DE BUSSY) 27 septembre 1972 (1972-09-27) * revendication 1 * | 2 | |
| A | DE 21 27 528 A (NIKOLAUS SORG GMBH & CO INGENI) 14 décembre 1972 (1972-12-14) * page 2, alinéa 3 - page 6, alinéa 1 * | 2 | **DOMAINES TECHNIQUES RECHERCHES (Int.Cl.7)** |
| A | EP 0 748 773 A (SORG GMBH & CO KG) 18 décembre 1996 (1996-12-18) * page 7, ligne 55 - page 8, ligne 45; figures 1,2 * | 1-6 | C03B |

Le présent rapport a été établi pour toutes les revendications

| Lieu de la recherche | Date d'achèvement de la recherche | Examinateur |
|---|---|---|
| LA HAYE | 22 novembre 2001 | Reedijk, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**EP 1 266 868 A1**

**ANNEXE AU RAPPORT DE RECHERCHE EUROPEENNE
RELATIF A LA DEMANDE DE BREVET EUROPEEN NO.**   EP 01 50 0146

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-11-2001

| Document brevet cité au rapport de recherche | | Date de publication | Membre(s) de la famille de brevet(s) | | Date de publication |
|---|---|---|---|---|---|
| US 4405351 | A | 20-09-1983 | AUCUN | | |
| FR 2195597 | A | 08-03-1974 | FR | 2195597 A1 | 08-03-1974 |
| US 3573017 | A | 30-03-1971 | AUCUN | | |
| GB 1290742 | A | 27-09-1972 | FR | 2029840 A5 | 23-10-1970 |
| | | | DE | 2003544 A1 | 30-07-1970 |
| | | | IE | 34328 B1 | 16-04-1975 |
| | | | US | 3580976 A | 25-05-1971 |
| DE 2127528 | A | 14-12-1972 | DE | 2127528 A1 | 14-12-1972 |
| EP 0748773 | A | 18-12-1996 | DE | 19521513 A1 | 19-12-1996 |
| | | | AT | 176218 T | 15-02-1999 |
| | | | DE | 59601212 D1 | 11-03-1999 |
| | | | EP | 0748773 A2 | 18-12-1996 |

EPO FORM P0460

Pour tout renseignement concernant cette annexe : voir Journal Officiel de l'Office européen des brevets, No.12/82